# EUROPEAN PATENT APPLICATION

(11) **EP 4 447 401 A1**
(43) Date of publication of application: **16.10.2024**
(21) Application number: 22910117.5
(22) Date of filing: 22.12.2022
(51) Int. Cl.: H04L 45/12, H04L 45/02, H04L 41/0806

(54) **NETWORK DOMAIN CONTROL METHOD AND APPARATUS, NETWORK SYSTEM, AND STORAGE MEDIUM**

(30) Priority: 23.12.2021 CN 202111589811; 23.12.2021 CN 202111588897; 23.12.2021 CN 202111589686
(71) Applicant: QKM Technology (Dong Guan) Co., Ltd, Dongguan City, Guangdong Province (CN)
(72) Inventor: ZHAN, Xiaoli, Dongguan, Guangdong 523808 (CN); SHI, Jinbo, Dongguan, Guangdong 523808 (CN); SHA, Chi, Dongguan, Guangdong 523808 (CN); CHEN, Lihui, Dongguan, Guangdong 523808 (CN); WANG, Hong, Dongguan, Guangdong 523808 (CN)
(74) Representative: Meyer, Thorsten
(86) International application number: PCT/CN2022/140893
(87) International publication number: WO 2023/116805

(57) **Abstract**

The present application relates to the technical field of communications. Disclosed are a network domain control method and apparatus, a network system, and a storage medium, which are applied to any activated node in a network topology. The method comprises: initiating a routing addressing request to each node in a network topology, wherein the routing addressing request is used for requesting an activated node to respond; within a preset first time period, updating a routing table according to response data which is returned by each node on the basis of the routing addressing request, wherein the routing table is used for recording a node which makes a response and any node; and creating a first network domain according to the nodes which are recorded in the routing table. By respectively setting the states of a plurality of devices which cooperate with each other to be activated and by mutually sending a routing addressing request within a preset time period, updating is performed to obtain routing tables with the same routing table entries, such that a first network domain can be created by means of respective negotiation, thereby improving the flexibility and universality of creating a network domain, which helps to improve the efficiency of creating the network domain.

## Description

### FIELD OF THE INVENTION

The present application relates to, but is not limited to, the field of communication technology, in particular to a control method, a control device, a network system, and a storage medium for a network domain.

### BACKGROUND OF THE INVENTION

In the field of communication technology, especially in industrial Ethernet, multiple devices (such as robot arms or industrial control devices) often need to collaborate to complete a process flow. Typically, there is a plurality of devices capable of handling various process flows installed within the same factory or workspace. To facilitate the device control, these devices are often managed within separate network domains based on the content of the process flow control, so that communication signals between devices within the same network domain are only forwarded within the corresponding domain. Although network domain management is made to the devices in existing technologies, the creation and configuration of the network domains still require manual intervention, resulting in low automation and management efficiency, and leading to high control costs. Therefore, there is an urgent need for an efficient method to control the network domains.

### SUMMARY OF THE INVENTION

The embodiments of the present application provide a control method, a control device, a network system, and a storage medium for a network domain, thereby realizing efficient control of the network domain.

The present application provides a control method for a network domain, including the steps of:
within a predetermined first time period, initiating, by any node in a network as an addressing initiating node, a routing addressing request to other nodes in the network, wherein the routing addressing request is configured to request a response from a receiving node;
when the routing addressing request is received by any receiving node, returning, by the receiving node as an addressing response node, response data related to routing to an addressing initiating node;
updating, by the addressing initiating node, a routing table entry in a routing table of the addressing initiating node based on the response data, wherein the routing table entry contains routing information from a current node to other nodes;
by the end of the predetermined first time period, all routing table entries of all addressing response nodes being recorded in an updated routing table of any addressing initiating node in the network; creating a first network domain based on all nodes recorded in all updated routing tables; wherein each node in the first network domain no longer initiates or responds to the routing addressing request.

Optionally, the step of "when the routing addressing request is received by any receiving node, returning, by the receiving node as an addressing response node, response data related to routing to an addressing initiating node" specifically includes:
when the routing addressing request is received by any receiving node, finding, by the receiving node as an addressing response node, a port that received the routing addressing request, and further determining whether there are other ports connected to other nodes;
if yes, forwarding a modified routing addressing request to one of other ports connected to other nodes, wherein the modified routing addressing request is appended with a port number that received the routing addressing request, an identifier of the addressing response node, and a forwarding port number to an end of data packet of the routing addressing request;
if no, or if forwarding has traversed all ports connected to other nodes, returning the modified routing addressing request as response data to the port that received the routing addressing request.

Optionally, the step of "updating, by the addressing initiating node, a routing table entry in a routing table of the addressing initiating node based on the response data" specifically includes obtaining, by the addressing initiating node, a network topology based on the response data, calculating the routing table entry from the addressing initiating node to the addressing responding node, and updating the routing table of the addressing initiating node.

Optionally, after updating the routing table of the addressing initiating node, the method further includes updating address management table information of the addressing initiating node, and exchanging and updating the address management table information between the addressing initiating node and adjacent nodes. The method further includes:
obtaining a total forwarding hop count corresponding to each node in the first network domain, wherein the total forwarding hop count represents a sum of forwarding hop counts from a node to other nodes in the first network domain;
obtaining address management table information of each node in the first network domain; and
determining a master node of the first network domain based on the total forwarding hop count corresponding to each node and the address management table information, and determining nodes other than the master node as slave nodes.

Optionally, the step of "determining a master node of the first network domain based on the total forwarding hop count corresponding to each node and the address management table information" includes:
determining at least one central node with a minimum total forwarding hop count from the nodes of the first network domain based on the total forwarding hop count corresponding to each node; and
electing one node with a highest version number or latest update time of the address management table information from the at least one central node as the master node in the first network domain based on the address management table information of the at least one central node.

Optionally, the method further includes initializing the master node and the slave nodes of the first network domain, wherein the master node is configured to generate initialization information for initializing each of the slave nodes, and send the initialization information to adjacent slave nodes according to the routing table to initialize the adjacent slave nodes, and each of the slave nodes is initialized and configured to send the initialization information to the adjacent slave nodes that are uninitialized according to the routing table.

Optionally, the method further includes:
receiving second domain information from an second network domain that is adjacent and physically connected, and sending first domain information to the second network domain;
sending a domain merging request based on the second domain information and the first domain information; and
performing domain merging on the first domain information and the second domain information based on feedback information from users to the domain merging request.

Optionally, the step of "performing domain merging on the first domain information and the second domain information based on feedback information from users to the domain merging request" includes:
reinitializing each member node of the first network domain based on a restart request of the first network domain specified in the feedback information; sending a domain joining request to the second network domain, after any node of the first network domain is reinitialized, causing the second network domain to add any node to the routing table of the second network domain; or
negotiating between the first and the second network domains based on an agreed merge instruction in the feedback information, to determine a node in one of the first and the second network domains to be restarted and joined to the other of the first and the second network domains.

Optionally, the method further includes:
receiving a domain splitting request from a node to be split from the first network domain; and
removing node information of the node to be split based on the domain splitting request, and updating the routing table of each node in the first network domain.

Optionally, the method further includes triggering updates on the routing table of each node based on an online status of each node in the first network domain.

Optionally, the method further includes:
sending a domain joining request, by a node to be joined, to a proxy node in the first network domain, wherein the proxy node is a node that is adjacent and physically connected to the node to be joined in the first network domain;
sending domain initialization information to the node to be joined for initialization based on the domain joining request; and
synchronizing routing information of the node to be joined to each node in the first network domain.

Optionally, the method further includes setting a bandwidth priority based on a predetermined priority parameter, including:
obtaining unit transmission duration corresponding to a first packet with a highest priority;
dividing a predetermined polling cycle into multiple sub-cycles based on the unit transmission duration; and
allocating the multiple sub-cycles according to a bandwidth utilization proportion specified in the priority parameter.

As another aspect, the present application further provides a control device for a network domain, including:
a routing addressing module, configured to within a predetermined first time period, enable any node in a network as an addressing initiating node to initiate a routing addressing request to other nodes in the network, wherein the routing addressing request is configured to request a response from a receiving node; and the routing addressing module is further configured to when the routing addressing request is received by any receiving node, enable the receiving node as an addressing response node to return response data related to routing to an addressing initiating node;
a routing updating module, configured to during the predetermined first time period, allow the addressing initiating node to update a routing table entry in a routing table of the addressing initiating node based on the response data, wherein the routing table entry contains routing information from a current node to other nodes; and
a network domain creation module, configured to by the end of the predetermined first time period, record all routing table entries of all addressing response nodes an updated routing table of any addressing initiating node in the network and create a first network domain based on all nodes recorded in all updated routing tables, wherein each node in the first network domain no longer initiates or responds to the routing addressing request.

The present application further provides a network system, including a plurality of nodes, each of which is configured to execute steps of the method mentioned above.

The present application further provides a computer-readable storage medium, on which computer program commands are stored, wherein the computer program commands are executed by a processor to implement the steps of the method.

In the control method, control device, network system and storage medium of the network domain provided in the embodiments of the present application, during the creation stage of the network domain, each activated node initiates a route addressing request to other activated nodes in the same network topology respectively, so that all activated nodes in the network topology are recorded in the routing table of each node after a predetermined period of time. In such a way, the first network domain is formed based on the nodes recorded in the routing table, and the routing table of each member node is no longer updated automatically after creation. Therefore, compared with the traditional method using gateway, the network domain creation in the present application requires no additional gateway devices, and the configuration of the member nodes for the network domain is achieved just by means of node activating, which improves the flexibility and versatility of the network domain creation, reduces the cost, and ultimately improves the efficiency of network domain creation. Furthermore, the method of adjacency diffusion is used for initialization, which is more efficient and simpler. In addition, based on the total forwarding hop counts and the address management table information, the master node can be autonomously elected and the transmission efficiency of the master node is ensured, which reduces the probability of manual intervention and lowers the administrator requirements for the network domain management.

### BRIEF DESCRIPTION OF THE DRAWINGS

The following is a brief introduction of the drawings used in the embodiments of the present application, in order to more clearly explain the technical solution in the embodiments of the present application. Obviously, the drawings described below only show some embodiments of the present application. For persons ordinarily skilled in the art, other drawings may also be obtained based on these drawings without any creative work.
FIG. 1 is a flowchart of a control method for a network domain provided in an embodiment of the present application.
FIG. 2 is a network topology diagram of a network system provided in an embodiment of the present application.
FIG. 3 is a network topology diagram of a network system provided in another embodiment of the present application.
FIG. 4 is a flowchart of a control method for a network domain provided in an embodiment of the present application.
FIG. 5 is a network topology diagram of a network system provided in an embodiment of the present application.
FIG. 6 is a flowchart of electing the master node in an embodiment of the present application.
FIG. 7 is a flowchart of joining nodes to an existing network domain in an embodiment of the present application.
FIG. 8 is a network topology diagram of a network system provided in an embodiment of the present application.

### DETAILED DESCRIPTION OF ILLUSTRATED EMBODIMENTS

In order to make the purpose, technical solution and advantages of the embodiments of the present application more clear, the technical solution in the embodiments of the present application will be clearly and completely described in combination with the drawings attached to the embodiments of the present application. It should be understood that the specific embodiments described herein are not intended to limit the scope of the present application, but only to interpret the present application.

It should be noted that although the functional modules are divided in the device diagram and the logical sequence is shown in the flowchart, in some cases the steps shown or described can be performed in a different order than the modules in the device or in the flowchart. The terms "first", "second", etc. in the specification, claims and drawings above are only used to distinguish similar objects and are not necessarily used to describe a particular order or sequence.

In the field of communication technology, especially in industrial Ethernet, multiple nodes (such as robot arms or industrial control devices) often need to be communicated and collaborated due to the requirements of the process flow. Therefore, to facilitate the management of the same type of workflow, the nodes belonging to the same process are typically grouped into the network domain. However, in practical applications, the configurations for the network domain are often based on a workshop or factory, where the network domain includes other industrial devices. This inclusion of additional industrial devices within the network domain results in longer transmission paths among the industrial devices collaborating within the domain, which leads to unnecessary efficiency loss. Although isolation into smaller network domains can be achieved through routers, switches, and similar communication equipment, the creations for numerous network domains incurs relatively high costs. Furthermore, when making changes to the network topology, physical reconfiguration and isolation is often required, leading to cost increasing of creating network domains. Additionally, manual intervention is still required for the network domain management. For example, the configuration controller should have a deep understanding of network topology and devices while configuring each device and the master node, which increases control complexity and costs, ultimately results in lower processing efficiency within the network domain.

To further explain the technical solution provided by the embodiments of the present application, detailed explanations are provided below in combination with accompanying drawings and specific embodiments. While the embodiments of the present application provide methodological steps as depicted in the embodiments or drawings, these methods may include more or fewer operational steps based on conventionality or non-creative labor. In steps without a logical necessity or causal relationship, the execution order of these steps is not limited to that provided by the embodiments of the present application.

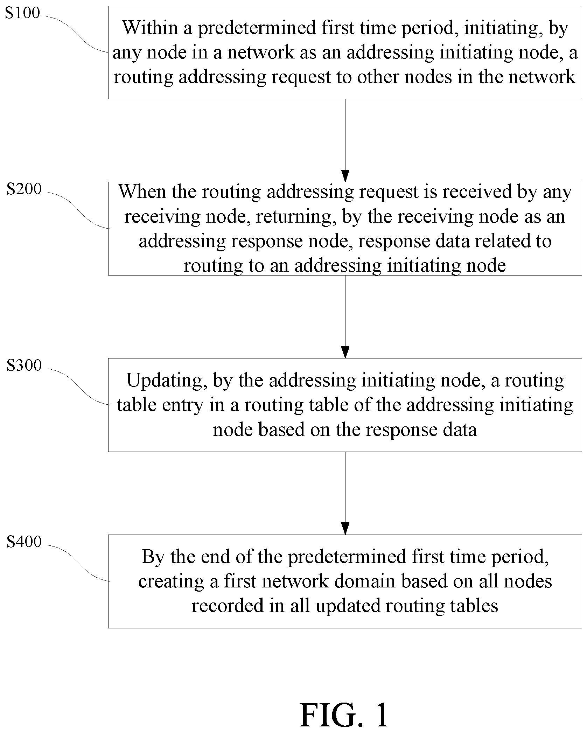

Referring to FIG. 1, a control method for a network domain provided in the embodiments of the present application is applicable to any node in the network topology, and the method includes the following steps:
S100, within a predetermined first time period, initiating, by any node in a network as an addressing initiating node, a routing addressing request to other nodes in the network, wherein the routing addressing request is configured to request a response from a receiving node.

It should be noted that each node in the network topology has a routing addressing function. Each node in the network topology is loaded with the protocol created by the network domain. An activated node indicates that the current device is available for the protocols created in the network domain. For example, the availability of the node is determined based on the node's power-on state or by judging the availability of an activated identifier set for the device, in some embodiments.

S200, when the routing addressing request is received by any receiving node, returning, by the receiving node as an addressing response node, response data related to routing to an addressing initiating node.

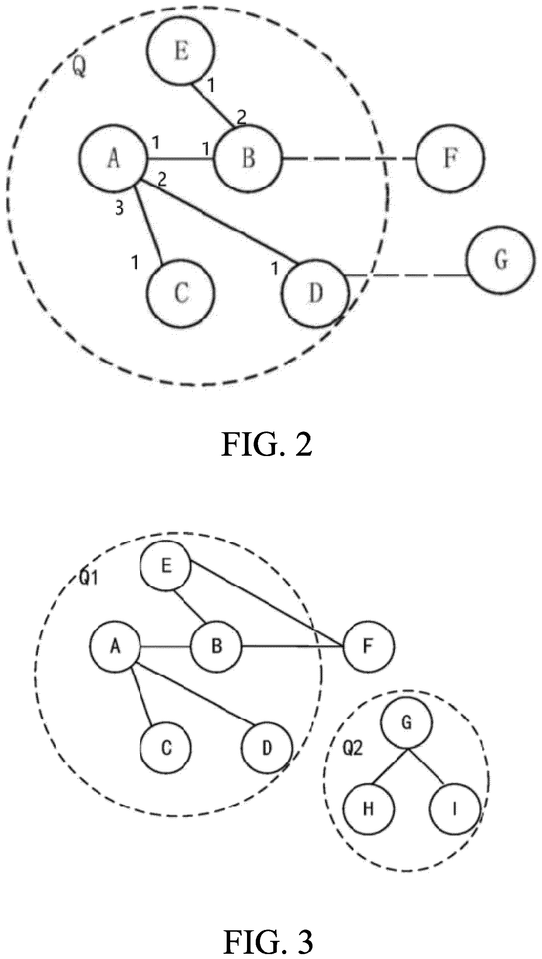

As an illustrative example, referring to the embodiment in FIG. 2, the network topology includes a plurality of nodes A to G, with nodes A to E activated. In this case, taking node A as an example, node A sends routing addressing requests to nodes B to E. Accordingly, nodes B-E will all respond to node A as they are all connected to node A. Nodes B to E also perform routing addressing in the same manner as node A. Therefore, for nodes A to E, the routing table contains information for A to E. Nodes F and G, being not activated, will not respond to nodes A to E.

As shown in FIG. 2, node A sends a routing addressing request to node B, with the data packet of the request containing an identifier A.id of node A, and a port A.port1 of node A which sent this request. Upon receiving the routing addressing request from node A, node B acts as an addressing response node to respond to node A. Accordingly, node B checks its ports to find out another port B.port2 connected to node E in addition to a port B.port1 that received the routing addressing request. Therefore, node B appends "B.port1, B.id, B.port2" to the end of the data packet of the routing addressing request, thereby modifying the data packet as "A.id, A.port1, B.port1, B.id, B.port2". This modified routing addressing request is then forwarded to node E via port B.port2. Node E also checks its port to find out only one port E.port1, and thus the data packet in node E is modified as "A.id, A.port1, B.port1, B.id, B.port2, E.port1, E.id, E.port1", which is then returned to node B. Having traversed its ports, node B further modifies the data packet as "A.id, A.port1, B.port1, B.id, B.port2, E.port1, E.id, E.port1, B.port2, B.id, B.port1", which constitutes the response data returned to node A. At this point, it's ascertained that the topology structure on the port A.port1 of node A as A-B-E based on the return information. Node A also sends routing addressing requests to nodes C and D, thereby receiving responses such as "A.id, A.port2, D.port1, D.id, D.port1" and "A.id, A.port3, C.port1, C.id, C.port1", respectively. In such a way, it's ascertained that the topology structure on the port A.port2 is A-D and on the port A.port3 is A-C.

S300, updating, by the addressing initiating node, a routing table entry in a routing table of the addressing initiating node based on the response data, wherein the routing table entry contains routing information from a current node to other nodes.

At this point, the topology structures of nodes A, B, C, D, and E in the first network domain are ascertained, and it's easy to calculate and obtain their routing table entries, accordingly the shortest routing may be found by using various existing techniques such as Dijkstra's shortest path algorithm. For example, to establish a routing table entry from nodes A to E, with the destination address being E.id, the path must go through B first, so the next hop node is B.id. It takes two hops to reach node E, hence the forwarding hop count is 2. Similarly, the routing table entries can be established from node A to nodes B, C, D, and E, respectively. Thus, the routing table for node A is now updated. Likewise, when nodes B, C, D, and E act as addressing initiating nodes, their respective routing tables also can be obtained. Furthermore, after updating the routing table, node A may share the routing information by exchanging address management table information with adjacent nodes B, C, and D. Similarly, node B may also share the routing information with adjacent nodes A and E, ultimately enabling each node in the first network domain to possess and maintain a complete routing table covering all nodes.

As an illustrative example, referring to the embodiment shown in FIG. 3, the network topology includes nodes A to I. Nodes A to E and nodes G to I are activated. At this time, each activated node from A to E and G to I initiates a routing addressing request. However, nodes A to E will not receive responses from nodes G to I since there is no communication between nodes G to I and nodes A to E. Consequently, the routing tables of nodes A to E only include nodes A to E, while the routing tables of nodes G to I only include nodes G to I. Therefore, in practical application processes, multiple physically isolated nodes can be simultaneously activated to achieve more efficient network domain creation.

It should be noted that the predetermined time period may be set manually, e.g., set as 10 minutes or more to ensure mutual acquisition of routing information in the interconnected activated nodes.

It should be noted that, after the predetermined time period, e.g., 10 minutes, the routing table is no longer updated for each node. Therefore, once the first network domain is successfully created, the nodes in the first network domain will be considered as unavailable when other nodes within the same network topology attempts to create a network domain. Exemplarily, referring to the embodiment shown in FIG. 2, based on the successful creation of the first network domain Q, when node F as an activating node initiates a routing addressing request, nodes B, A, C, D, and E will have no response to the routing addressing request of node F since they are in the first network domain Q, although nodes B, A, C, D, and E are communicated with node F. By this token, node F can only form a network domain consisting of itself.

S400, by the end of the predetermined first time period, all routing table entries of all addressing response nodes being recorded in an updated routing table of any addressing initiating node in the network; creating a first network domain based on all nodes recorded in all updated routing tables; wherein each node in the first network domain no longer initiates or responds to the routing addressing request.

It should be noted that the first network domain can be created based on the nodes recorded in the routing table.

It should be noted that, after the automatic route addressing function is disabled, each node in the first network domain shares a routing table with the same table entry, and a packet initiated by any node in the first network domain is forwarded to other nodes in the same network domain. As an illustrative example, referring to the embodiment shown in FIG. 2, for the first network domain Q that has been created, a first packet sent by node A can pass through nodes B, E, D, and C, but cannot pass through nodes F and G.

Understandably, all member nodes in the same network domain are configured to cooperate mutually to realize a product process flow or processing flow.

By this token, in the present application, the route addressing request is respectively initiated by each activated node to other activated nodes in the same network topology, and updates on the routing table will be stopped after the predetermined time period, so that all activated nodes in the network topology are recorded in the routing table of each node. In such a way, the first network domain is formed based on the nodes recorded in the routing table. That is, a network domain may be created between the communicative activated nodes in the predetermined time period. Therefore, the configuration of the member nodes for the network domain is achieved just by means of node activating, which improves the flexibility and versatility of the network domain creation. After the first network domain is successfully created, with the routing table of each member node no longer automatically updating, the member nodes within the first network domain are not communicative with nodes beyond the network domain. Compared with the traditional method using gateway, the network domain creation in the present application requires no additional gateway devices, thereby improving the flexibility and versatility of the network domain creation, reducing the cost, and ultimately improving the efficiency of network domain creation.

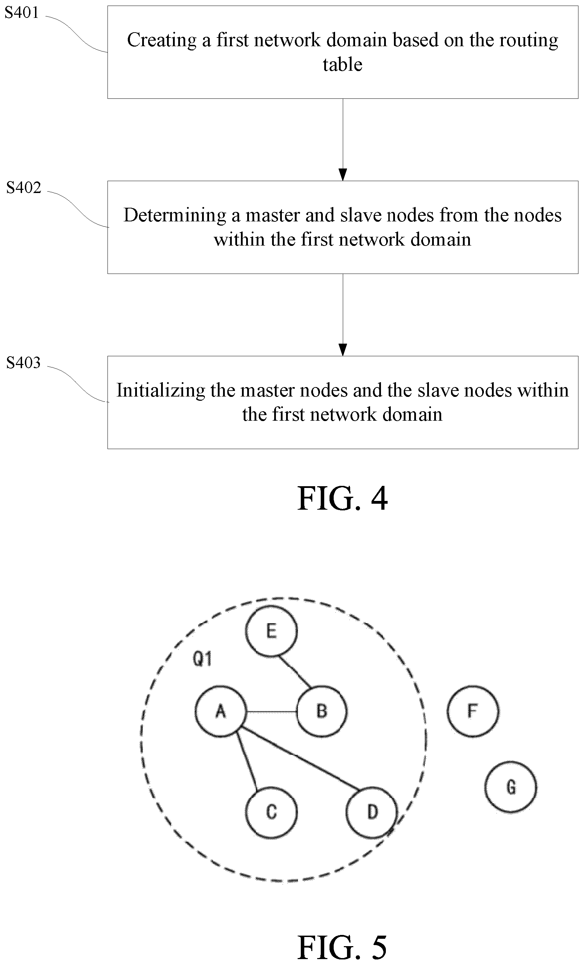

In some embodiments, to efficiently manage the network domain, a master node can be elected from the nodes within the network domain, with other nodes designated as slave nodes, allowing the master node to control all nodes within the network domain. Therefore, referring to FIG. 4, the method in the present embodiment further includes the following steps:
S401, creating a first network domain based on the routing table;
S402, determining a master and slave nodes from the nodes within the first network domain; and
S403, initializing the master nodes and the slave nodes within the first network domain.

Understandably, the first network domain is proceeded with initialization to all member nodes through a process called adjacency diffusion. Specifically, the initialization follows. The master node is configured to generate initialization information for initializing each of the slave nodes, and diffuse the first initialization information to adjacent slave nodes to initialize the adjacent slave nodes. Each of the slave nodes, once initialized, proceeds to initialize any adjacent slave nodes through adjacency diffusion.

It should be noted that both the master node and slave nodes in the first network domain possess routing capabilities and have routing tables containing information about all member nodes in the first network domain. After the initialization of the master node is completed, user-configured initialization parameters can be encapsulated into domain initialization information, thereby forming first domain initialization information. The master node then triggers each slave node to begin initialization. The first domain initialization information includes information about the master node and parameters necessary for initializing each slave node, such as node identifiers allocate to the slave nodes, thereby allowing each slave node to extract relevant information from the first domain initialization information for its own initialization.

It should be noted that, the routing tables of the nodes in the first network domain contain path information to each node within the domain. Adjacency diffusion refers to the process whereby an initialized slave node transmits the first domain initialization information to adjacent uninitialized slave nodes, thus enabling a step-by-step initialization process. At this stage, each initialized member node within the first network domain only needs to monitor whether the adjacent member nodes have completed the initialization, thereby improving the initialization efficiency.

Therefore, after the initialization for the master node in the network domain is completed, the domain initialization information are sent to the adjacent slave nodes for initialization, and adjacency diffusion is processed from the initialized slave nodes to the adjacent uninitialized slave nodes for further initialization. In such a way, it allows administrators to only configure the master node and swiftly initialize each member node within the network domain, which significantly improves initialization efficiency compared to traditional manual configuration methods for each member node.

As an illustrative example, referring to the network topology shown in FIG. 5, including devices A, B, C, D, E, F and G, where devices A, B, C, D, E are nodes of the first network domain Q1, device F is a node of the second network domain Q2, and device G is a node of the third network domain Q3. In the first network domain Q1, device A is the master node, and devices B, C, D and E are the slave nodes. Devices B, C and D are adjacent to device A, and at this time device A sends the first domain initialization information to devices B, C, and D. Then device E receives the first domain initialization information from device B. At this time, node A only needs to pay attention to its adjacent nodes B, C, and D. After sending the first domain initialization information, it can use the initialization information of nodes B to E, which is more efficient than manually initializing nodes A, B, C, D, and E respectively. In such a way, nodes B, C, D and E can be controlled faster by node A, thus improving the management and control efficiency of member nodes in the first network domain.

Understandably, at predetermined intervals, routing table synchronization may be processed based on the routing table of the master node in the network domain.

It should be noted that at predetermined intervals, the routing table of the master node in the network domain may be synchronized to each slave node whose original route table will then be replaced. For example, taking the master node of the first network domain as an example, the master node of the first network domain broadcasts a first routing table to each slave node. After receiving the first routing table, each slave node replaces the first routing table with its second routing table to realize routing table synchronization. In some embodiments, the routing table synchronization may be realized by adjacency diffusion.

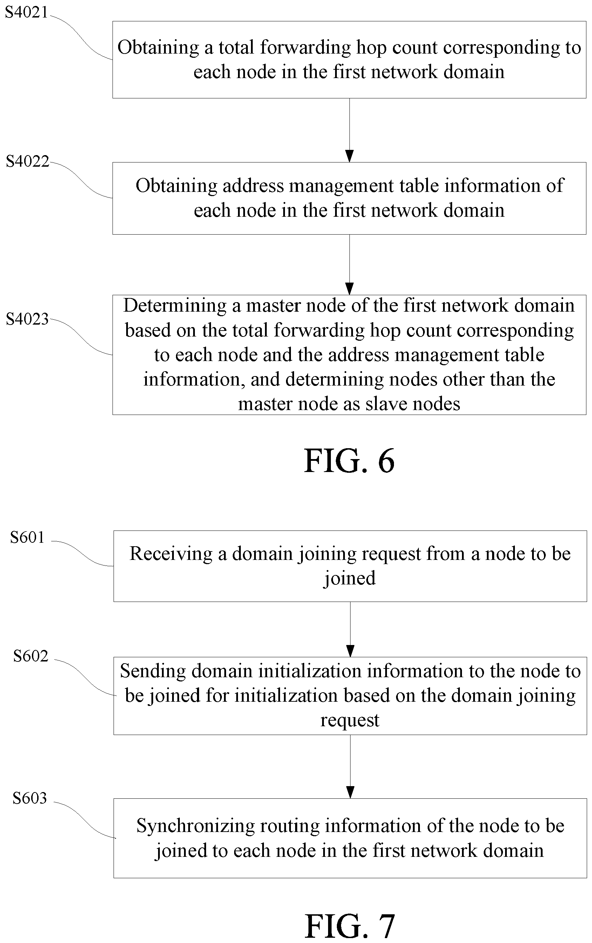

Understandably,, referring to FIG. 6, the step S402 specifically includes the following steps:
S4021, obtaining a total forwarding hop count corresponding to each node in the first network domain. Specifically, the total forwarding hop count represents a sum of forwarding hop counts from a node to other nodes in the first network domain.

It should be noted that the forwarding hop counts between any two nodes is recorded in the routing table within the first network domain. Consequently, the total forwarding hop count for each node can be calculated based on the forwarding hop count between any two nodes recorded in the routing table within the first network domain. In some embodiments, during the network domain creation process, the forwarding hop count of each node passing a specific node may be recorded for each update on the routing table, thereby determining the total forwarding hop count for each node.

S4022, obtaining address management table information of each node in the first network domain.

It should be noted that, each member node within the first network domain has their respective address management table information recording physical address information for each member node. During the network domain creation process, for each route addressing, the two adjacent nodes will exchange and update their address management table information, with each update corresponding to a version number.

S4023, determining a master node of the first network domain based on the total forwarding hop count corresponding to each node and the address management table information, and determining nodes other than the master node as slave nodes.

It should be noted that based on the total forwarding hop count corresponding to each node, it is possible to identify which member node in the first network domain has been traversed the most times and which member node has shortest total efficiency to reach other member nodes. In such a way, the node located at the center of the first network domain can be identified.

It should be further noted that multiple member nodes may be identified as the center based on total forwarding hop counts. Therefore, the address management table information is introduced to increase the likelihood that the elected master node is at the center of the first network domain.

By this token, each node in the first network domain may be autonomously elected based on total forwarding hop counts and the address management table information, thereby reducing manual intervention. The master node determined by total forwarding hop counts has the highest forwarding efficiency, which acts as the logical center of the first network domain. Meanwhile, the introduction of the address management table information allows further determination of the logical center based on the update time of this information, thereby ensuring that the elected master node achieves highest efficiency in communication with the slave nodes within the first network domain. In such a way, autonomous selection of the master node is achieved while maintaining high transmission efficiency, thereby reducing manual intervention and lowering the administrator requirements for the network domain management, and finally reducing management costs in the embodiments of the present application.

As an illustrative example, referring to the embodiment shown in FIG. 2, based on the total forwarding hop counts of nodes A, B, C, D, E, nodes A and B are identified as relatively efficient. By comparing the update time of the address management table information of nodes A and B, the master node of the network domain is determined.

It should be understood that, step S403 includes determining at least one central node with a minimum total forwarding hop count from the nodes of the first network domain based on the total forwarding hop count corresponding to each node; and electing one node with a highest version number or latest update time of the address management table information from the at least one central node as the master node in the first network domain based on the address management table information of the at least one central node .

It should be noted that the highest version number refers to the latest update time, implying more frequent use. Therefore, the elected master node is more likely to have the highest transmission efficiency.

Understandably, the step of electing one node with a highest version number or latest update time of the address management table information from the at least one central node as the master node in the first network domain based on the address management table information of the at least one central node, includes electing multiple central nodes with the highest version number from at least one central node based on the address management table information of the at least one central node; and selecting a central node with the smallest physical address from the multiple central nodes with the highest version number as a first network master node.

It should be noted that the physical address can be an IP address or a MAC address, and both are uniquely identifiable.

As an illustrative example, referring to the embodiment shown in FIG. 2, the central node with the highest version number of the address management table information is A and B respectively. Specifically, the IP address of node A is the smallest, thus node A is determined as the master node when IP address is applied as the election regulation. In this case, nodes B, C, D, and E in the network domain Q are all slave nodes and managed by the master node A.

Understandably, the method according to the embodiment of the present application further includes: obtaining the online status of the master node; and determining whether to reselect the master node based on the online status of the master node.

It should be noted that for the first network domain, the master node may be offline due to a power failure or fault. In this case, a new master node is elected to manage the remaining member nodes to ensure normal communication and management between the remaining member nodes. As an illustrative example, referring to the embodiment in FIG. 2, taking master node A in the network domain Q as an example, once the master node A fails, a new master node B is reelected. In this case, the master node B can manage the nodes E and B in the first network, thus reducing manual intervention and reducing the cost of human control.

Understandably, the method according the embodiment of the present application further includes triggering updates on the routing table of each node based on an online status of each node in the first network domain.

In some embodiments, each node in the network domain periodically detects the online status of adjacent nodes and shares the detected online status to the network domain, and the routing table for each node is updated according to the shared information. When a node (such as some devices or components) in the first network domain is abnormal, the abnormal devices will be removed or disconnected online, which triggers the update of the routing table without affecting the running of other normal devices. As an illustrative example, referring to the embodiment shown in FIG. 2, once node A fails, nodes B to E will update their respective routing tables, and the information of node A will then be removed from the routing table.

In some embodiments, each node in the first network domain periodically detects the online status of the adjacent nodes, and if the adjacent nodes are detected to be offline, an offline request will be actively reported to the master node in the first network domain. In some embodiments, the slave node can actively send the offline request to the master node before going offline.

Understandably, the master node of the network domain is configured to collect the online status of each node trigger an update of the routing table. In some embodiments, after the master node of the first network domain receives the offline request from the slave node of the first network domain, the slave node corresponding to the offline request is deleted from the routing table, and then the updated routing table is synchronized to each slave node of the first network domain.

Understandably, in the first network domain, if a member node goes offline and an online request is not initiated within a predetermined second time period, the member node will be considered to be offline by the master node of the first network domain. In view of this, in some embodiments, the master node of the first network domain is configured to receive an offline request from a second node in the first network domain. If an online request from the second node is not received within the predetermined second time period after the offline request, the second node is determined to be offline, and then the offline second node is removed from the routing table, and the updated routing table is then synchronized to the slave nodes in the first network domain.

It should be noted that partial path connectivity between online member nodes in the network domain can be maintained by updating the routing table instructions. In practical applications, this manner may ensure the completion of some basic procedural steps.

Understandably, after the second time period, the master node sets the node identifier of the offline nodes, which are already identified in the predetermined node management table, to idle status. Specifically, the node identifier is allocated by the master node of the first network domain.

It should be note that, each member node in the first network domain is allocated with a node identifier (namely node ID), which can be automatically allocated by the master node or configured manually. After setting the node identifier of the offline node to idle status, this node identifier can be allocated to a newly joined node.

As an illustrative example, referring to the embodiment shown in FIG. 5, if node E goes offline and node G requests to join the first network domain Q1, the node identifier of node E can be allocated to node G.

In some embodiments, even though an offline node sent an offline request, upon reconnecting, it still retains initialization information belonging to the first network domain. In view of this, the master node of the first network domain will send a domain removal request upon receiving an online request from the previous offline node to avoid conflicts with existing member nodes in the first network domain, so that the node can be restarted and rejoin the first network domain. In such a way, the manual intervention during component/node replacements is reduced, thereby improving node management efficiency.

Exemplarily, referring to the topology diagram shown in FIG. 2, when the master node A receives an offline request about the slave node E, either initiated by the slave node E or by its adjacent node B, if the master node A does not receive an online request from the slave node E after the second time period, the node status of the slave node E is set to be idle status, thereby allowing its node identifier to be allocated to a newly joined node. Concurrently, requests are sent to nodes B, C, and D to update their routing tables. When the slave node E comes online, an online request is directly sent to the master node A since the configuration information of the first network domain Q is retained, so that the master node A sends a domain removal request to the slave node. In other embodiments, if a node fails, the remaining member nodes can continue to operate normally by means of splitting or troubleshooting.

Understandably, as shown in FIG. 7, the methods executed by the master node in the first network domain further include:
Step S601, receiving a domain joining request from a node to be joined.

The domain joining request is used to send a request to the master node in the first network domain for joining the first network domain.

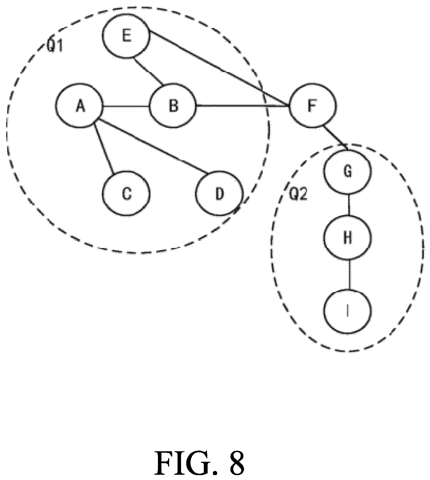

It should be noted that, based on the proximity to adjacent network domains and the member nodes within the network domains, each node to be joined selects one member node as a proxy node to initiate a domain joining request to the corresponding network master node in the respective network domain. For example, as illustrated in the exemplary embodiment shown in FIG. 8, node F to be joined, which is adjacent to slave nodes B and E in the first network domain Q1 and also adjacent to slave node G in the second network domain Q2, will respectively send an addressing request to slave nodes B, E, and G to determine the shortest path from node B to the first network master node Consequently, node B is selected as the proxy node for node F to be joined. That is, the domain joining request is forwarded by the member node in the network domain closest to the node to be joined. In this case, in response to this domain joining request, slave node B is configured to forward the request, and master node A is configured to initialize the process for the new node such as allocating a node identifier.

Understandably, the domain joining request is forwarded to the joining node through a third node that is closest to the master node and is adjacent to the node to be joined. Understandably, if the node to be joined is adjacent to the master node in the first network domain, it directly sends a domain joining request to the master node; otherwise, the request can be forwarded to the master node by the nearest adjacent node to the node to be joined.

Step S602, sending domain initialization information to the node to be joined for initialization based on the domain joining request.

Understandably, the master node can allocate a node identifier to the node to be joined based on a node management table. Specifically, the master node queries an available first node identifier from a predetermined node management table. Depending on the validity of the first node identifier, the master node sends the second domain initialization information to the node to be joined.

It should be noted that if the first node identifier has not been allocated to any slave node, then the first node identifier is considered valid. If the first node identifier has already been allocated to a slave node, then the validity of the slave node needs to be checked.

Understandably, the master node is configured to query the slave nodes of the first network domain to find the node that matches the first node identifier, send an online query request to the node matching the first node identifier and set the validity of the first node identifier corresponding to the response data not received from the online query request as valid, and finally obtain the second domain initialization information based on the valid first node identifier and send it to the node to be joined.

Step S603, synchronizing routing information of the node to be joined to each node in the first network domain.

It should be noted that upon receiving the second domain initialization information, the node to be joined initializes and provides feedback to the master node of the first network domain. The master node then updates its routing table and initiates routing table synchronization to other member nodes of the first network domain to ensure consistency of routing table entries among all member nodes in the domain.

It should be noted that, simplified troubleshooting of faulty nodes can be achieved by steps S601 to S603, and the faulty nodes after physical restoration can be automatically joined to the network domain, which simplifies replacement efficiency.

For example, for the node to be joined, which neighbors the first and second network domains, it will send routing addressing information respectively to an adjacent node A in the first network domain (which can be either a master node or a slave node of the first network domain) and to a adjacent node J in the second network domain. If node A provides the shortest path (fewest forwarding hop counts) back to the master node in the first network domain, the domain joining request of the node to be joined is sent by node A; otherwise, sent by node J.

Understandably, the master node in the network domain periodically synchronizes the stored routing table to the slave nodes. By periodically synchronizing the routing tables in real-time, consistency between the routing tables of the slave nodes and the master node in the network domain can be ensured.

Understandably, the master node can also arrange routing table entries according to a predetermined sorting rule.

In some embodiments, the routing table contains node identifiers, and the node identifiers are used to replace destination and source addresses in the transmitted packets. In such cases, the sorting rule can be set based on the node identifiers, thereby allowing rapid determination of the next hop address using binary search. In other embodiments, the sorting rule may be based on the destination address, thereby allowing rapid determination of the destination address and subsequently the next hop address from the routing table.

It should be noted that, each routing table entry includes a destination address, a next hop address, a network port, and a forwarding hop count. Specifically, the destination address contains destination MAC and destination node ID, the next hop address indicates the next node to which the packet should be forwarded, and the network port indicates the port which is to be used to reach the next hop address. The forwarding hop count represents the minimum number of hops required to reach the destination address, indicating the shortest path to the destination address.

Understandably, the method according to the embodiment of the present application further includes receiving a domain splitting request from a node to be split from the first network domain; and removing node information of the node to be split based on the domain splitting request, and updating the routing table of each node in the first network domain.

It should be noted that, said removing node information involves clearing information about the node to be split from the routing table of each member node in the first network domain, ensuring that the node to be split does not exist in the first network domain during routing addressing in the domain. Said removing node information further includes notifying the node to be split to clear all the saved information about the first network domain, such as the routing tables and the node identifiers, etc..

It should be noted the convenience of online replacement of components is increased by the domain splitting request. When certain devices or components are abnormal, the domain splitting request allows for the online removal/disconnection of the abnormal devices without impacting the operation of other normal devices. Furthermore, in case of abnormalities, the abnormal node can be located by the domain splitting request.

It should be noted that, the domain splitting request can be initiated via hot plugging.

It should be noted that, for any member node of the first network domain, upon initiating a domain splitting request, the node becomes a discrete point which may be automatically joined into the first network domain as a node to be joined, thereby further simplifying node management for administrator and reducing the requirements to the administrator.

Understandably, the method according to the embodiment of the present application further includes receiving second domain information from an second network domain that is adjacent and physically connected, and sending first domain information to the second network domain; and performing domain merging on the first domain information and the second domain information based on the second domain information and the first domain information.

It should be noted that, it's usually required to combine multiple sub-processes to achieve more efficient collaborative operations in industrial Ethernet. Therefore, the domain merging processing can expedite the networking of devices involved in merged processes, thereby improving the efficiency of creating network domains.

It should be noted that, the domain merging processing may include perform a predetermined rule calculations by either the first or second network domain based on the first domain information and second domain information, so as to determine who initiates the domain merging request. Specifically, the domain merging request means merging the first and second network domains into a new network domain. After merging, each member node in the first and second network domains shares a common routing table. As an illustrative example, referring to the embodiment shown in FIG. 3, after merging the first network domain Q1 with the second network domain Q2, nodes A to E and nodes G to I share the same routing table.

It should be noted that in other embodiments, the domain merging processing includes initiating the domain merging request to a terminal (such as the host computer of a robot), so that the user can judge who merges based on the first domain information and the second domain information, thereby ensuring that the member nodes of one network domain will not be affected, while the nodes in another network domain can be merged.

In some embodiments, the node of the first network domain sends the domain merging request to the terminal based on the second domain information and the first domain information. Then the user terminal judges whether to agree to merge based on the information of the first domain and the second domain, and sends feedback information to the first network domain and the second network domain. Finally, the node of the first network domain performs the merging with the first network domain and the second network domain based on the feedback information received.

Understandably, the domain merging request may contain warning information, which is used to prompt the user to select whether to initiate a restart request for either the first or second network domain.

It should be noted that, the warning information serves to remind the user of the physical connection between the first and second network domains, and prompt the user to decide on domain merging processing or not. In some embodiments, the feedback information sent from the user terminal includes a merging consent instruction. Upon receiving the merging consent instruction, the first and second network domains negotiate to determine one to be restarted and receiving a restart request. In other embodiments, the user terminal may directly specify the network domain to initiate the merge, causing the other network domain to be restarted, with feedback information from the user terminal including a restart request for the network domain being restarted. Specifically, the restart request is used to request the initialization of each node of the network domain that is being restarted.

Understandably, for example, the first network domain is required to be restarted. Each node in the first network domain completes domain merging processing as follows: based on the restart request in the feedback information, each node in the first network domain is reinitialized. Specifically, the restart request is used to request the initialization of each member node of the network domain. After that, a domain joining request is sent to the second network domain, prompting the second network domain to add this node to its routing table. The node in the second network domain, upon receiving the domain joining request from the node in the first network domain, adds the node of the first network domain to the routing table of the second network domain, thereby completing the domain merging.

It should be noted that, the node no longer has the attribute information of the first network domain after it is initialized. Therefore, upon requesting to join the second network domain, the node will be considered as a discrete node to be joined to the second network domain, thereby facilitating the merger of the first and second network domains.

Understandably, in the network domains with master and slave nodes, the domain merging processing may also be executed by the master node.

In some embodiments, when the physical connection between the second network domain and the first network domain is detected, a hot-plug event can be generated. The master node of the first network domain receives this hot-plug event and sends the first domain information to the second network domain, thereby initiating negotiation for domain merging in the second network domain. Specifically, the hot-plug event is generated based on the physical connection status between the second network domain and the first network domain.

In some embodiments, the master node of the second network domain is adjacent to that of the first domain. The master node of the first domain reports a hot-plug event upon detecting a physical connection interface to the second domain. In other embodiments, a physical connection is detected between the second domain and one slave node of the first domain. In this case, a change in the physical connection status for the slave node in the first domain is detected, and the slave node in the first domain is connected to the second network domain, thus a hot-plug event is triggered and sent to the master node of the first network domain. Similarly, the second network domain may receive a hot-plug event in the same approach and send the second domain information of the second network domain to the first network domain.

Understandably, after the master node of the first network domain receives the second domain information from the master node of the network second domain, the first domain information of the first network domain is compared with the second domain information based on predefined negotiation conditions to determine which domain should issue a warning event. Similarly, the same approach is applied for the second network domain, to determine which domain should issue the warning event. In such a way, both domains reach the same negotiation result, the master node of the negotiated party sends the warning event, and the other party takes no action.

It should be noted that in some embodiments, the second domain information includes address and identifier of the master node of the second network domain, by which the first network domain may identify the network domain. In some embodiments, the negotiation may be based on IP addresses of the master nodes in both domains. In some embodiments, the negotiation may be based on the priority of configured business in each network domain. Specifically, the business with higher priority is configured to send the warning event, thereby highlighting the domain conflicts and the network domain with higher priority.

As an illustrative example, referring to the embodiment in FIG. 5, where devices F and G are part of the second network domain and devices A, B, C, D, E are part of the first network domain (Q1), with device A as the master node of the first network domain Q1 and device F as the master node of the second network domain. If device A determines that the second network domain has lower business priority upon receiving the second domain information from device F, it will issue a warning event. Conversely, if device F determines that the first network domain Q1 has higher priority upon receiving the first domain information from device A, it takes no action. In some embodiments, the master node of the first network domain may receive a user's reset command for device F, to reset device F. In other embodiments, if all master nodes are set for automatic domain merging, it's negotiated that the first network domain will reset the second network domain after a predetermined period, so that each member of the second network domain is served as the node to be joined and joined into the first network domain Q1.

Understandably, the method according to the embodiment of the present application further includes setting a bandwidth priority based on a predetermined priority parameter.

It should be noted that, when each network domain is applied in industrial control, there may be a plurality of packet types with different real-time requirements and urgencies in the network domain, such as isoch (real-time packets), async (asynchronous packets), PTP (clock synchronization packets), and others (other packets). For example, in some applications, the priority for the packet types follows: isoch > async > others. By setting the bandwidth priority, the packet transmission can be allocated properly, thereby ensuring each message to be parsed within limited bandwidth, and avoiding network blockages due to varied packet delays or data volume.

It should be noted that, the priority parameter may be determined by negotiation among member nodes or by the master node based on the packet types of the slave nodes.

Understandably, the step of setting a bandwidth priority based on the priority parameter includes obtaining unit transmission duration corresponding to a first packet with a highest priority, dividing a polling cycle into multiple sub-cycles based on the unit transmission duration, and allocating the multiple sub-cycles according to a bandwidth utilization proportion specified in the priority parameter.

It should be noted that, the polling cycle is multiples of the unit transmission duration (e.g., when the unit transmission duration is 1s, the polling cycle can be 7s, 8s or 9s, etc.). For instance, when the transmission duration is 2s, the polling cycle can be 4s, 8s or 10s, etc.

It should be noted that, the priority parameter indicates the bandwidth utilization proportion of the packets of each priority in the sub-cycle. In this case, the system allocates a predetermined number of auto-cycles to the packet types with the higher priorities and then to the packet types with the lower priorities in chronological order.

For example, the priority is determined based on the packet types. In a network domain Q supporting real-time and non-real-time packets (such as TCP/IP), the real-time packets have higher priority, the polling cycle is 2s and the unit transmission duration of the real-time packets is 0.5s, and the unit transmission duration of the non-real-time packets is 0.3s. Each device is initialized after domain creation, and then the unit transmission duration of the real-time packets is obtained. In this case, four sub-cycles are obtained, wherein one cycle (the first sub-cycle in the polling cycle) is allocated to the real-time packets in the priority parameter, and three cycles are allocated to the non-real-time packets in the priority parameter. If the types of the non-real-time packets vary in priority, each type of the non-real-time packets is allocated with a sub-cycle similarly to the allocations for the real-time and non-real-time packets.

It should be noted that the implementation of bandwidth priority occurs at the FPGA (Field Programmable Gate Array) level of the device, where caching is configured within the FPGA to buffer the packets with different priorities. For example, when packet 1 with a priority is being processed and packet 2 with another priority is received, the latter packet 2 will be stored in the cache waiting processing.

It should be noted that in some embodiments, the cache is partitioned based on priority. In some embodiments, the FPGA may monitor the cache; when it becomes full, excess packets may be discarded, or commands may be sent to adjacent nodes to halt the transmission of corresponding packets.

Understandably, the method according to the embodiment of the present application further includes obtaining and storing the node identifiers for each member node in the first network domain.

For example, as shown in the embodiment of FIG. 2, nodes A to E in the first network domain Q are respectively configured with node identifiers ranging from 1 to 5. At this point, each member node A to E in the first network domain Q will store mapping relationships between the node identifiers 1 to 5 and their corresponding member nodes.

Understandably, the step of storing node identifiers for each member node in the first network domain includes adding corresponding node identifiers to the routing table entries for each member node.

It is noted that, the convenience of node ID allocation can be enhanced since the master node is configured for automatically allocating node IDs

Understandably, the method further includes routing addressing based on the node identifiers.

It should be noted that replacing the source and destination addresses with the node identifiers enables the routing addressing based on the node identifiers, thereby reducing the bytes occupied by transmitted packets within the network domain.

Understandably, the node identifiers of the member nodes are allocated and broadcasted by the master node of the first network domain.

Understandably, the method includes sorting the routing table entry according to a predetermined sorting rule.

For example, in some embodiments, the destination addresses are arranged in descending numerical order, which allows for rapid exclusion of half the destination addresses through binary search after the destination addresses are determined, thereby improving table lookup efficiency.

It should be noted that in some embodiments, if the node identifiers are filled in the positions corresponding to destination addresses in transmitted packets within the first network domain, the sorting rule can be set to sort by node identifiers, thus directly determining the positions of the node identifiers using binary search. It should be noted that in some embodiments, as the node identifiers correspond uniquely to each member node within the first network domain and are ordered numbers, a separate array can store the mapping relationship between the node identifiers and the physical addresses of the member nodes, allowing the sorting rule to be set by destination addresses in the routing table entries.

It should be noted that, when displaying the first network domain to the user, the member nodes can be identified by the node identifiers, thereby simplifying management.

Based on the same invention concept as the aforementioned control method for network domains, the embodiments of the present application further provides a control device for a network domain applicable to any node that is in activated status within a network topology. The control device includes:
a routing addressing module, for initiating a routing addressing request to each node in the network topology, wherein the routing addressing request is configured to request a response from a receiving node;
a routing update module, for within a predetermined first time period, updating a routing table entry in a routing table of the addressing initiating node based on the response data, wherein the routing table entry contains routing information from a current node to any node; and
a network domain creation module, for creating a first network domain based on the nodes recorded in updated routing tables.

Optionally, the control device for the network domain may include:
a master node election module, for determining the master node and slave nodes within the first network domain;
an initialization module, for initializing the master node and slave nodes within the first network domain, wherein the master node is configured to generate initialization information for initializing each of the slave nodes, and send the first initialization information to adjacent slave nodes to initialize the adjacent slave nodes; each of the slave nodes, once initialized, proceeds to initialize any adjacent slave nodes through adjacency diffusion.

Optionally, the master node election module is specifically configured to obtain a total forwarding hop count corresponding to each node in the first network domain, wherein the total forwarding hop count represents a sum of forwarding hop counts from a node to other nodes in the first network domain; obtain address management table information of each node in the first network domain; and determine a master node of the first network domain based on the total forwarding hop count corresponding to each node and the address management table information, and determine nodes other than the master node as slave nodes.

Optionally, the master node election module is specifically configured to determine at least one central node with a minimum total forwarding hop count from the nodes of the first network domain based on the total forwarding hop count corresponding to each node; and elect one node with a highest version number or latest update time of the address management table information from the at least one central node as the master node in the first network domain based on the address management table information of the at least one central node.

Optionally, the master node election module is further configured to obtain the online status of the master node; and determine whether to reselect the master node based on the online status of the master node.

Optionally, the control device for the network domain further includes a domain merging module configured to receive second domain information from an second network domain that is adjacent and physically connected, and send first domain information to the second network domain; send a domain merging request based on the second domain information and the first domain information; and perform domain merging on the first domain information and the second domain information based on feedback information from users to the domain merging request.

Optionally, the domain merging module is specifically configured to reinitialize each member node of the first network domain based on a restart request of the first network domain specified in the feedback information; send a domain joining request to the second network domain, after any node of the first network domain is reinitialized, causing the second network domain to add any node to the routing table of the second network domain.

Optionally, the control device for the network domain further includes a domain splitting module configured to receive a domain splitting request from a node to be split from the first network domain; and remove node information of the node to be split based on the domain splitting request, and update the routing table of each node in the first network domain.

Optionally, the routing update module is further configured to trigger updates on the routing table of each node based on an online status of each node in the first network domain.

Optionally, the routing update module is further configured to receive an offline request from a second node in the first network domain. If an online request from the second node is not received within the predetermined second time period after the offline request, the second node is determined to be offline.

Optionally, the control device for the network domain further includes a node addition module configured to receive a domain joining request from a node to be joined; send domain initialization information to the node to be joined for initialization based on the domain joining request; and synchronize routing information of the node to be joined to each node in the first network domain.

Optionally, the control device for the network domain further includes a bandwidth priority setting module configured to set a bandwidth priority based on a predetermined priority parameter.

Optionally, the bandwidth priority setting module is specifically configured to obtain unit transmission duration corresponding to a first packet with a highest priority; divide a predetermined polling cycle into multiple sub-cycles based on the unit transmission duration; and allocate the multiple sub-cycles according to a bandwidth utilization proportion specified in the priority parameter.

The control device for the network domain described in the embodiments of the present application employ the same inventive concept as the control method for the network domain mentioned above, which can achieve the same beneficial effects, thus further details are omitted here.

Persons skilled in the art can understand that the whole or partial steps of implementing the above embodiments can be accomplished through hardware related to program commands. The programs can be stored on a computer-readable storage medium and when executed, performs the steps described in the embodiments. The computer-readable storage medium can be any medium or data storage device accessible by a computer, including but not limited to various medium capable of storing program codes, such as mobile storage devices, random access memory (RAM), magnetic storage (e.g., floppy disks, hard disks, magnetic tapes, magneto-optical disks (MO)), optical storage (e.g., CD, DVD, BD, HVD), and semiconductor memory (e.g., ROM, EPROM, EEPROM, NAND FLASH, SSD), etc..

Alternatively, if the functions are implemented in the form of software functional modules and for sale or use as independent products, they can be stored in a computer readable storage medium. Based on this, the technical solutions of the present application essentially or part of the present application contributing to the prior arts or part of the technical solutions can be embodied in the form of software products. The computer software products are stored in a storage medium and includes a number of commands for enabling a computer device (such as personal computer, server and network device) to execute all or part of the methods described in the embodiments.

The above embodiments are provided for a detailed description of the technical solution of the present application, but the description of these embodiments is only for facilitating understanding of the methods disclosed herein and should not be construed as limitations on the embodiments of the present application. Variations or replacements readily apparent to those skilled in the art in this technical field should be encompassed within the protection scope of the present application.

## Claims

1. A control method for a network domain, comprising the steps of:
within a predetermined first time period, initiating, by any node in a network as an addressing initiating node, a routing addressing request to other nodes in the network, wherein the routing addressing request is configured to request a response from a receiving node;
when the routing addressing request is received by any receiving node, returning, by the receiving node as an addressing response node, response data related to routing to an addressing initiating node;
updating, by the addressing initiating node, a routing table entry in a routing table of the addressing initiating node based on the response data, wherein the routing table entry contains routing information from a current node to other nodes;
by the end of the predetermined first time period, all routing table entries of all addressing response nodes being recorded in an updated routing table of any addressing initiating node in the network; creating a first network domain based on all nodes recorded in all updated routing tables; wherein each node in the first network domain no longer initiates or responds to the routing addressing request.

2. The method according to claim 1, wherein the step of "when the routing addressing request is received by any receiving node, returning, by the receiving node as an addressing response node, response data related to routing to an addressing initiating node" specifically comprises:
when the routing addressing request is received by any receiving node, finding, by the receiving node as an addressing response node, a port that received the routing addressing request, and further determining whether there are other ports connected to other nodes;
if yes, forwarding a modified routing addressing request to one of other ports connected to other nodes, wherein the modified routing addressing request is appended with a port number that received the routing addressing request, an identifier of the addressing response node, and a forwarding port number to an end of data packet of the routing addressing request;
if no, or if forwarding has traversed all ports connected to other nodes, returning the modified routing addressing request as response data to the port that received the routing addressing request.

3. The method according to claim 1, wherein the step of "updating, by the addressing initiating node, a routing table entry in a routing table of the addressing initiating node based on the response data" specifically comprises:
obtaining, by the addressing initiating node, a network topology based on the response data, calculating the routing table entry from the addressing initiating node to the addressing responding node, and updating the routing table of the addressing initiating node.

4. The method according to claim 3, after updating the routing table of the addressing initiating node, further comprising updating address management table information of the addressing initiating node, and exchanging and updating the address management table information between the addressing initiating node and adjacent nodes.

5. The method according to claim 1, wherein the routing table entry in the routing table of each node comprises a destination node identifier, a next hop node, a network port, and a forwarding hop count; the next hop node indicates a next node passing through from a current node to a destination node, and the network port indicates a corresponding network port passing through from the current node to the next hop node; and the method further comprises:
obtaining a total forwarding hop count corresponding to each node in the first network domain, wherein the total forwarding hop count represents a sum of forwarding hop counts from a node to other nodes in the first network domain;
obtaining address management table information of each node in the first network domain; and
determining a master node of the first network domain based on the total forwarding hop count corresponding to each node and the address management table information, and determining nodes other than the master node as slave nodes.

6. The method according to claim 5, wherein the step of "determining a master node of the first network domain based on the total forwarding hop count corresponding to each node and the address management table information" comprises:
determining at least one central node with a minimum total forwarding hop count from the nodes of the first network domain based on the total forwarding hop count corresponding to each node; and
electing one node with a highest version number or latest update time of the address management table information from the at least one central node as the master node in the first network domain based on the address management table information of the at least one central node.

7. The method according to claim 6, further comprising initializing the master node and the slave nodes of the first network domain, wherein the master node is configured to generate initialization information for initializing each of the slave nodes, and send the initialization information to adjacent slave nodes according to the routing table to initialize the adjacent slave nodes, and each of the slave nodes is initialized and configured to send the initialization information to the adjacent slave nodes that are uninitialized according to the routing table.

8. The method according to claim 1 or 5, further comprising:
receiving second domain information from an second network domain that is adjacent and physically connected, and sending first domain information to the second network domain;
sending a domain merging request based on the second domain information and the first domain information; and
performing domain merging on the first domain information and the second domain information based on feedback information from users to the domain merging request.

9. The method according to claim 8, wherein the step of "performing domain merging on the first domain information and the second domain information based on feedback information from users to the domain merging request" comprises:
reinitializing each member node of the first network domain based on a restart request of the first network domain specified in the feedback information; sending a domain joining request to the second network domain, after any node of the first network domain is reinitialized, causing the second network domain to add any node to the routing table of the second network domain; or
negotiating between the first and the second network domains based on an agreed merge instruction in the feedback information, to determine a node in one of the first and the second network domains to be restarted and joined to the other of the first and the second network domains.

10. The method according to claim 1 or 5, further comprising:
receiving a domain splitting request from a node to be split from the first network domain; and
removing node information of the node to be split based on the domain splitting request, and updating the routing table of each node in the first network domain.

11. The method according to claim 1 or 5, further comprising:
triggering updates on the routing table of each node based on an online status of each node in the first network domain.

12. The method according to claim 1 or 5, further comprising:
sending a domain joining request, by a node to be joined, to a proxy node in the first network domain, wherein the proxy node is a node that is adjacent and physically connected to the node to be joined in the first network domain;
sending domain initialization information to the node to be joined for initialization based on the domain joining request; and
synchronizing routing information of the node to be joined to each node in the first network domain.

13. The method according to claim 1 or 5, further comprising setting a bandwidth priority based on a predetermined priority parameter, which comprises:
obtaining unit transmission duration corresponding to a first packet with a highest priority;
dividing a predetermined polling cycle into multiple sub-cycles based on the unit transmission duration; and
allocating the multiple sub-cycles according to a bandwidth utilization proportion specified in the priority parameter.

14. A control device for a network domain, comprising:
a routing addressing module, configured to within a predetermined first time period, enable any node in a network as an addressing initiating node to initiate a routing addressing request to other nodes in the network, wherein the routing addressing request is configured to request a response from a receiving node; and the routing addressing module is further configured to when the routing addressing request is received by any receiving node, enable the receiving node as an addressing response node to return response data related to routing to an addressing initiating node;
a routing updating module, configured to during the predetermined first time period, allow the addressing initiating node to update a routing table entry in a routing table of the addressing initiating node based on the response data, wherein the routing table entry contains routing information from a current node to other nodes; and
a network domain creation module, configured to by the end of the predetermined first time period, record all routing table entries of all addressing response nodes an updated routing table of any addressing initiating node in the network and create a first network domain based on all nodes recorded in all updated routing tables, wherein each node in the first network domain no longer initiates or responds to the routing addressing request.

15. A network system, comprising a plurality of nodes, each of which is configured to execute the steps of the method according to any of claims 1 to 13.

16. A computer-readable storage medium, on which computer program commands are stored, wherein the computer program commands are executed by a processor to implement the steps of the method according to any of claims 1 to 13.
